# FASCICULE DE BREVET EUROPEEN

(11) **EP 1 980 145 B1**
(45) Date de publication et mention de la délivrance du brevet: **23.03.2016**
(21) Numéro de dépôt: 08010092.8
(22) Date de dépôt: 29.06.2005
(51) Int. Cl.: A01G 9/02

(54) **Dispositif de végétalisation modulaire pour façades, murs ou analogues**
Modulare Vorrichtung zur Begrünung von Fassaden, Mauern oder Ähnlichem
Modular revegetation device for façades, walls or similar elements

(30) Priorité: 30.06.2004 FR 0407247
(43) Date de publication de la demande: 15.10.2008
(62) Demande divisionnaire de: 05784021.7
(73) Titulaire: SOPREMA (SAS), 67100 Strasbourg (FR)
(72) Inventeur: Bindschedler, Pierre Etienne, 67210 Obernai (FR); Lassalle, François, 67000 Strasbourg (FR)
(74) Mandataire: Nuss, Laurent

(56) Documents cités:
- EP-A- 1 059 396
- US-A1- 2002 007 593

## Description

La présente invention concerne le domaine des bâtiments, des constructions d'ouvrages et du génie civil, plus particulièrement le revêtement extérieur et la décoration de telles constructions, et a pour objet un dispositif de végétalisation modulaire de façades, murs ou analogues.

De plus en plus fréquemment, lors de constructions nouvelles ou de réaménagements de constructions ou de sites existants, des demandes relatives à l'intégration de surfaces entièrement ou partiellement végétalisées sont formulées.

Différentes solutions sont connues, certaines plus anciennes, d'autres plus récentes.

Ainsi, les techniques traditionnelles consistent à planter au pied des murs des plantes grimpantes. Ce principe a été amélioré en Allemagne notamment, depuis une quinzaine d'années, avec la mise au point de systèmes d'ancrage, de fixations adaptées, respectant les contraintes liées au bâtiment.

Plus récemment, différents procédés ont été proposés qui permettent de végétaliser les murs en déployant sur ceux-ci un feutre épais garni ou non de poches, lesquelles sont remplies de substrat et plantées. Ces systèmes requièrent une irrigation et une fertilisation permanentes, l'eau ruisselant sur le mur en permanence est recueillie dans un bac et réinjectée en haut du système.

Enfin, d'autres techniques ont été mises au point pour réaliser des murs anti-bruit végétalisés.

Toutefois, les différentes solutions connues présentent toutes des inconvénients et/ou des limitations limitant leur application, compte tenu des contraintes (temps, soins, suivi, ...) qu'elles imposent, de leur manque de souplesse ou de leur complexité de construction, de mise en oeuvre ou de maintenance. En outre, aucune de ces techniques n'est adaptée à la végétalisation durable de parties verticales de bâtiments, particulièrement s'il s'agit de surfaces fractionnées ou de géométrie irrégulière, et nécessite toutes un démontage d'une partie constitutive importante en cas de remplacement, de traitement ou de modification locale de leur arrangement.

Ainsi, les plantes grimpantes prennent généralement longtemps à s'installer, puis se développent souvent de façon excessive. Elles peuvent poser des problèmes sur les revêtements extérieurs des bâtiments (effritement du crépi, humidité permanente, ...), et d'une façon générale sont plutôt difficiles à maîtriser.

Les systèmes mettant en oeuvre un feutre ou une nappe analogue présentent également différents inconvénients.

En effet, du fait d'une capacité de rétention en eau très faible, ils nécessitent une humidification permanente réalisée directement au contact du mur (ce qui peut être préjudiciable au bâtiment), ainsi que la récolte de l'eau au bas du système (en principe réinjectée en partie haute). De par leur conception, ils ne peuvent être utilisés que sur la hauteur totale d'un mur, lui-même dépourvu de toute ouverture. Dans un but décoratif, la végétation employée développe une surface foliaire importante (plantes vigoureuses), très consommatrice d'eau, cette végétation étant très sensible à une éventuelle rupture de l'alimentation en eau.

Enfin, les techniques de murs anti-bruit végétalisés évoquées précédemment ont toutes en commun deux aspects rédhibitoires dans le contexte de la végétalisation de façades ou de murs, notamment en hauteur, à savoir : les éléments constitutifs, éventuellement sous forme de plaques modulaires montées sur une structure porteuse, sont lourds et épais (donc difficiles à manipuler) et doivent toujours être posés au sol. On connait du document EP-A-1059396 une telle.

La présente invention a pour but de pallier au moins les principaux inconvénients précités des systèmes existants.

A cet effet, invention a pour objet un dispositif de végétalisation de façades ou de murs selon la revendication technique 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue en perspective d'un module d'un dispositif de végétalisation selon invention ;
La figure 2A est une vue en perspective d'un bac faisant partie d'un module selon l'invention ;
Les figures 2B et 2C sont des vues, à une échelle différente, respectivement en coupe horizontale (selon A-A parallèlement aux parois supérieure et inférieure) et en élévation latérale du bac représenté sur la figure 2A;
La figure 3 est une vue similaire à celle de la figure 1, le module étant vide ;
Les figures 4A et 4B sont des vues partielles en coupe verticale d'un dispositif de végétalisation selon l'invention, respectivement avec des modules remplis de substrat et portant des plantes (figure 4A) et avec des modules vides (figure 4B - représentés sans substrat pour une meilleure illustration du mode de montage) ;
La figure 5 est une vue partielle en coupe horizontale et de dessus d'un dispositif de végétalisation, les modules étant dépourvus de substrat et de plantes pour une meilleure illustration ;
La figure 6 est une vue partielle en élévation latérale d'un profilé de verrouillage des modules à l'état monté représenté sur la figure 5 ;
La figure 7 est une vue partielle et en élévation frontale d'un dispositif de végétalisation selon l'invention, le substrat et les plantes n'étant pas apparentes ;
La figure 8 est une vue partielle de détail et en perspective d'une variante de réalisation d'un rail d'accrochage faisant partie de la structure porteuse du dispositif de végétalisation selon l'invention ;
Les figures 9A et 9B sont des vues similaires à celle de la figure 8 illustrant deux variantes de fixation d'un rail d'accrochage (les découpes n'étant pas représentées) ;
La figure 10 est une représentation en élévation frontale d'un dispositif de végétalisation selon l'invention formé de neuf modules, cette représentation illustrant schématiquement le réseau d'irrigation faisant partie dudit dispositif et le cheminement et l'écoulement du liquide d'irrigation ;
La figure 11 est une vue partielle identique à celle de la figure 7, le substrat, la partie locale du réseau d'irrigation et l'écoulement de l'eau étant représentés en plus ;
La figure 12 est une vue partielle et en élévation frontale de la partie inférieure d'un dispositif de végétalisation selon l'invention, et,
La figure 13 est une vue en coupe selon B-B de l'objet de la figure 12.

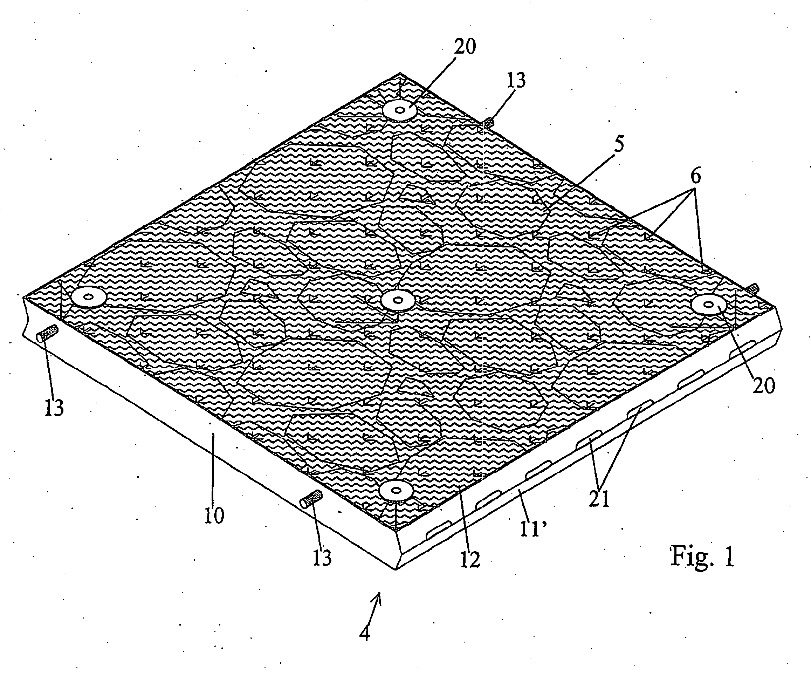

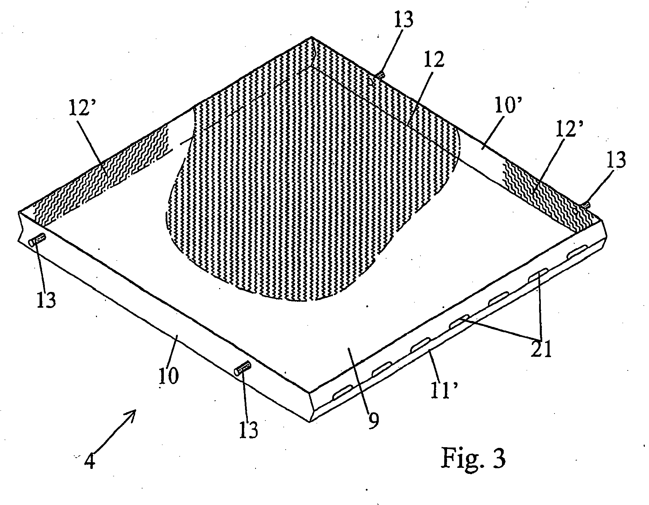

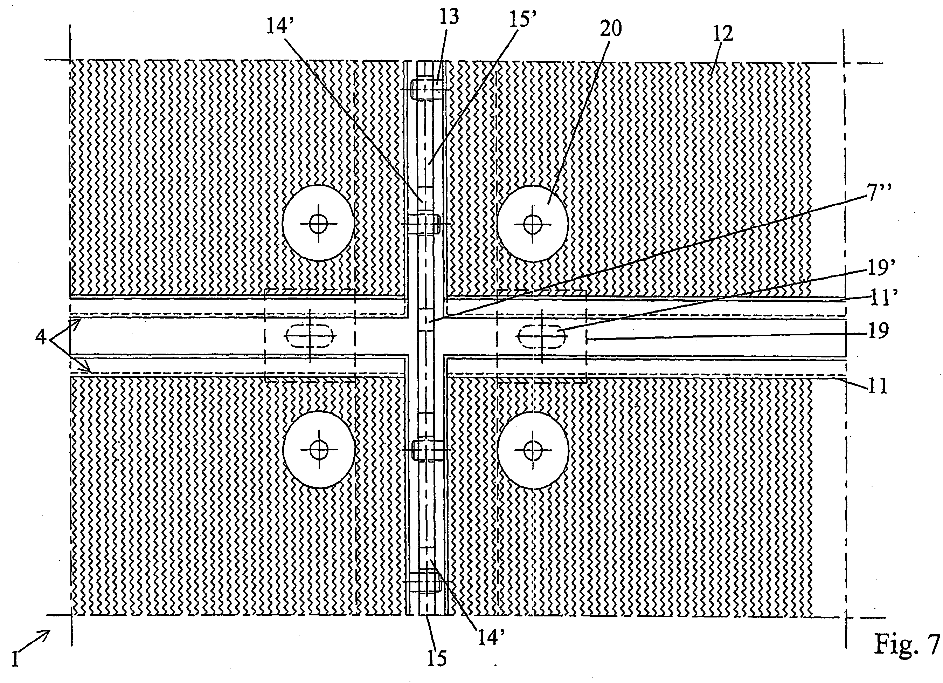

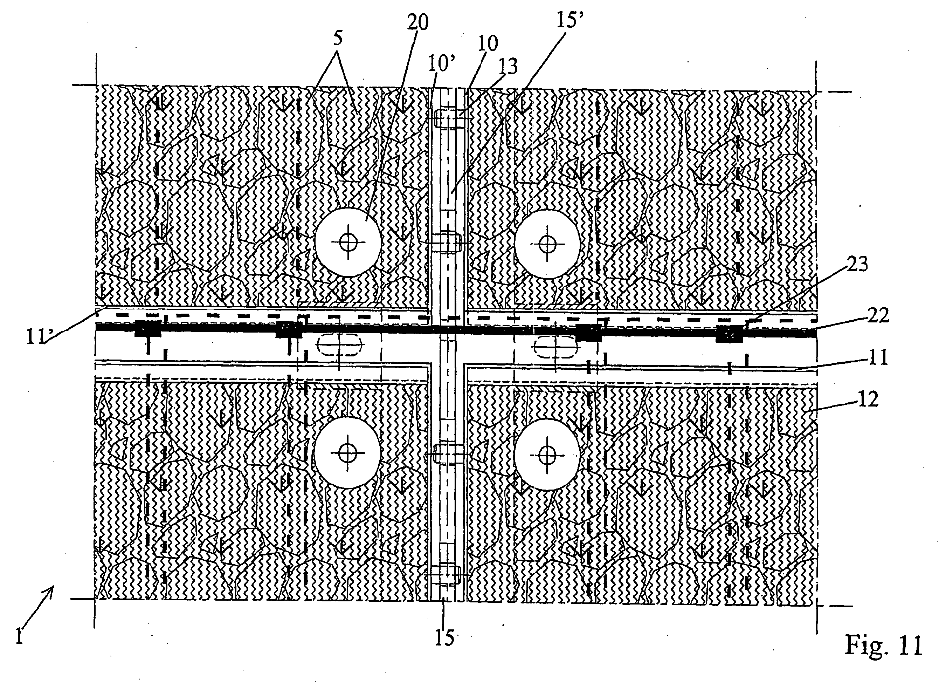

Les figures 1 à 5, 7, 10 et 11 montrent un dispositif 1 de végétalisation de façades ou de murs 2, principalement constitué, d'une part, par une structure porteuse 7, 19 fixée sur la face 3 de la façade ou du mur 2 à recouvrir, partiellement ou totalement, d'autre part, par au moins deux, préférentiellement une pluralité, de modules 4 à structure plate et à contour carré ou rectangulaire, contenant un substrat de culture 5 et présentant sur l'une de ses grandes faces (face apparente des modules) des éléments de végétation 6 apparents, ces modules étant montés de manière amovible sur ladite structure porteuse en masquant sensiblement cette dernière.

La structure porteuse consiste essentiellement en au moins deux rails verticaux 7 espacés sur lesquels les modules 4 sont montés en rangées verticales en étant situés à distance de la façade ou du mur 2 et en étant démontables individuellement.

Chaque module 4 se présente sous la forme d'un bac 8 de constitution générale plate, de forme parallélépipédique, de faible épaisseur par rapport à ses dimensions latérales et avec une paroi de fond 9 et des parois latérales 10, 10', 11, 11' sensiblement pleines.

La face ouverte du bac 8, qui est opposée au fond 9, est fermée par une paroi ajourée 12 retenant le substrat 5 et autorisant le passage des éléments de végétation 6 et les parois latérales opposées 10 et 10', orientées verticalement après montage, de chaque bac 8 sont pourvues d'éléments d'accrochage 13 destinés à coopérer avec des sites de réception (14) adaptés présents sur les rails de montage 7.

Dans la présente, les directions verticale et horizontale doivent être comprises comme étant définies par rapport au dispositif 1 monté et fixé.

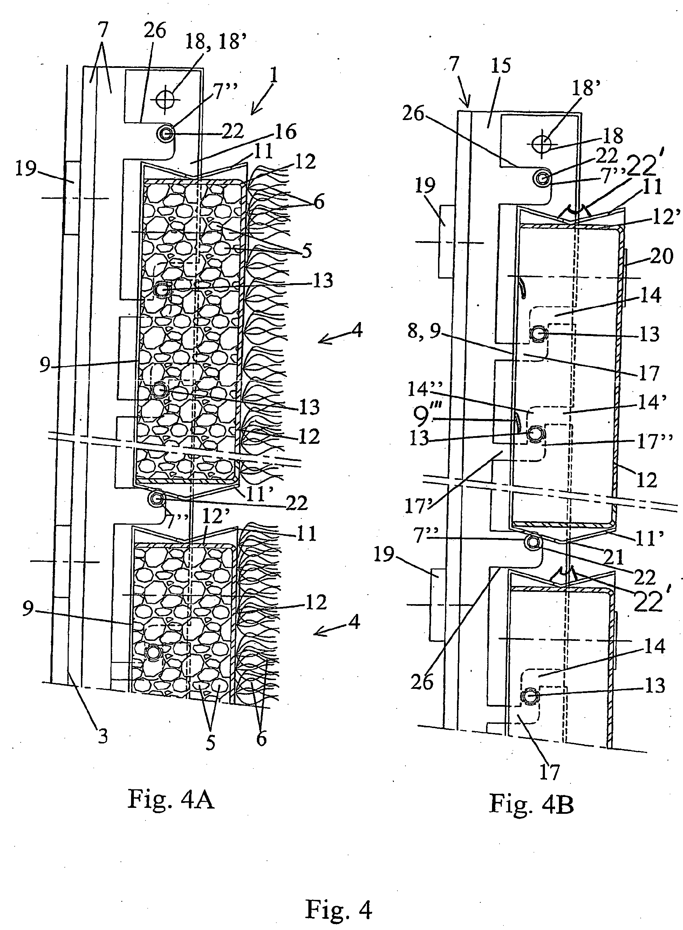

Comme le montrent notamment les figures 4A, 4B, 5, 7, 10 et 11 des dessins annexés, le dispositif de végétalisation 1 comprend généralement une pluralité de modules 4, agencés en une ou plusieurs rangée(s) verticale(s) et une ou plusieurs rangée(s) horizontale(s).

Les éléments d'accrochage 13 peuvent consister en des goujons ou des doigts rapportés ou formés sur les parois latérales 10 et 10' concernées et les rails verticaux 7 consistent en des profilés comportant une aile 15 pourvue de découpes 14 formant les sites de réception, ces découpes 14 étant débouchantes au niveau de l'arête libre 15' de ladite aile 15 et définissant une position de montage calée sous l'action de la pesanteur pour lesdits modules 4 en position montée.

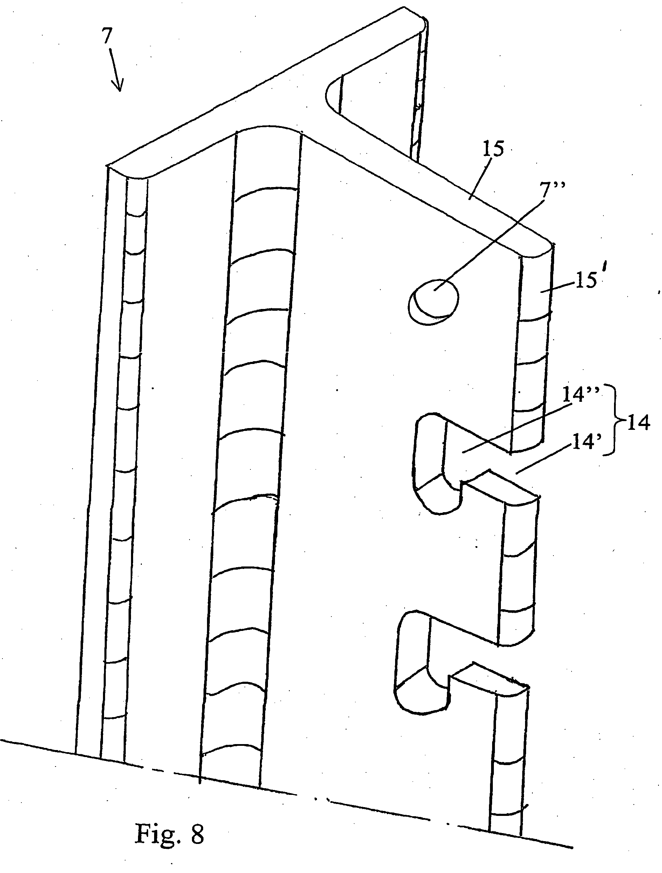

Chaque découpe 14 peut présenter sensiblement une forme de L, avec un segment 14' débouchant de ladite découpe 14 orienté sensiblement horizontalement et avec l'autre segment 14" borgne orienté sensiblement verticalement vers le bas, après fixation du rail 7 considéré sur la façade ou le mur 2. De plus, les goujons ou doigts 13 des deux parois latérales opposées 10 et 10' de chaque bac 8 sont mutuellement décalés dans la direction verticale, considérée en position de montage des modules 4, chaque rail 7 comportant des sites 14 pour la réception des goujons ou doigts 13 de deux rangées verticales adjacentes de modules 4 (figure 8).

Les modules 4 sont par conséquent chacun montés par accrochage entre deux rails 7 verticaux parallèles, en étant écartés latéralement d'une distance minimale pour assurer une continuité apparente de l'aspect végétalisé et pouvoir couvrir les interstices entre modules (et donc la structure porteuse) par les plantes ou éléments de végétation 6 analogues portés par les modules 4. Chaque rail 7 sert au support de deux rangées verticales de modules 4.

Ainsi, les goujons ou doigts 13 des deux modules 4 en regard, de même niveau et adjacents peuvent s'étendre chacun dans une découpe 14 correspondante du rail 7 situé entre eux. Il est ainsi possible, du fait de la non coïncidence de leurs goujons ou doigts 13, de rapprocher latéralement deux modules adjacents jusqu'à une distance juste légèrement supérieure à la longueur desdits goujons ou doigts 13, préférentiellement au nombre de deux par paroi 10, 10's (figures 1, 2A, 7 et 11).

Il convient de noter que d'autres formes de découpes procurant une position de calage sont également possibles, la forme en L étant quant à elle très simple à réaliser.

De manière avantageuse et comme cela ressort des figures 4A, 4B, 5 et 13, chaque rail 7 peut consister en un profilé en L ou en T et les dispositions relatives, d'une part, des goujons ou doigts 13 au niveau des parois 10, 10' et, d'autre part, des découpes 14 au niveau des ailes 15 d'accrochage des rails 7, sont telles que les arêtes libres 15' desdites ailes 15 sont situées en retrait par rapport à la face frontale apparente des modules 4 après leur montage.

Afin d'empêcher un décrochement non autorisé ou accidentel d'un module 4, il peut être prévu que le dispositif de végétalisation comprenne, au niveau de chaque rail 7, un moyen de verrouillage à l'état monté des modules 4 sous la forme d'un profilé 16, par exemple un fer plat ou un profilé en U, pourvu de découpes 17 coïncidant respectivement avec celles 14 desdits rails 7, permettant d'engager les goujons ou ergots 13 des modules 4 dans leur état monté et pouvant bloquer ces derniers en position de montage calée (figures 4, 5 et 6).

Lorsque les goujons ou doigts 13 présentent une longueur suffisante pour traverser complètement et s'étendre au-delà du coté opposé de l'aile 15, un simple profilé plat peut suffire.

Selon un mode de réalisation préféré, les découpes 17 de chaque profilé de verrouillage 16 peuvent présenter une forme en L, avec un segment débouchant 17' orienté sensiblement horizontalement et avec l'autre segment 17" borgne orienté sensiblement verticalement vers le haut, lorsque ledit profilé 16 est en position montée sur un rail 7, chaque profilé de verrouillage 7 comportant en outre, préférentiellement au niveau de son extrémité supérieure, un perçage 18 pour le passage d'une tige ou barre 18' de blocage en translation, cette dernière traversant également des perforations correspondantes ménagées dans les rails d'accrochage 7.

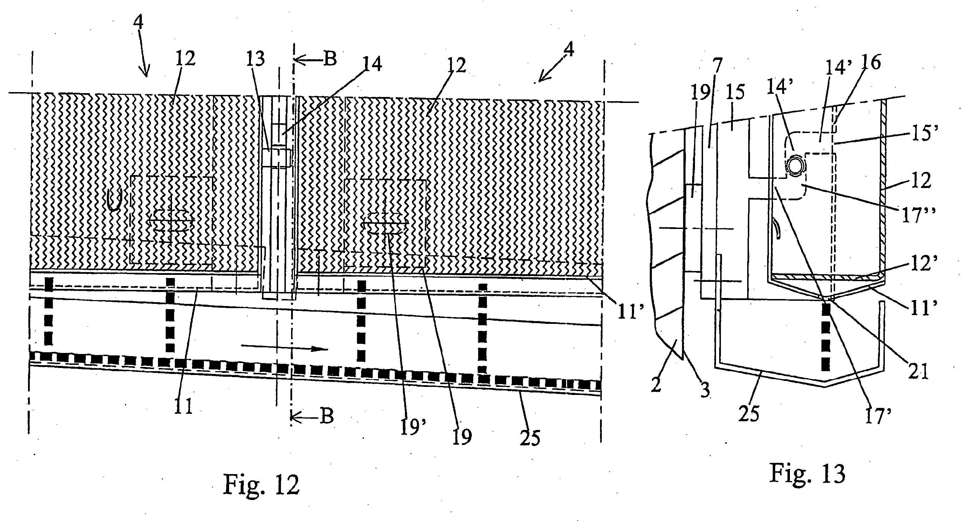

Ainsi, lesdits profilés 16 peuvent être bloqués de manière amovible dans leur position de verrouillage, lorsque les goujons, doigts ou ergots 13 sont pincés par cisaillement par coopération des fonds des segments borgnes 17" des découpes 17 desdits profilés 16 avec les fonds des segments borgnes 14" des découpes 14 des ailes 15 des rails (voir figures 4B et 13).

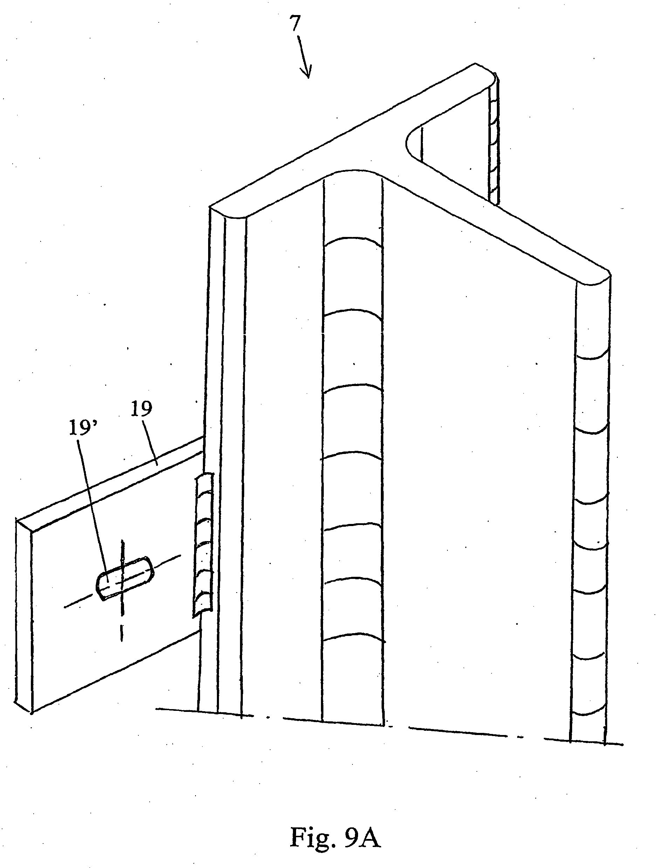

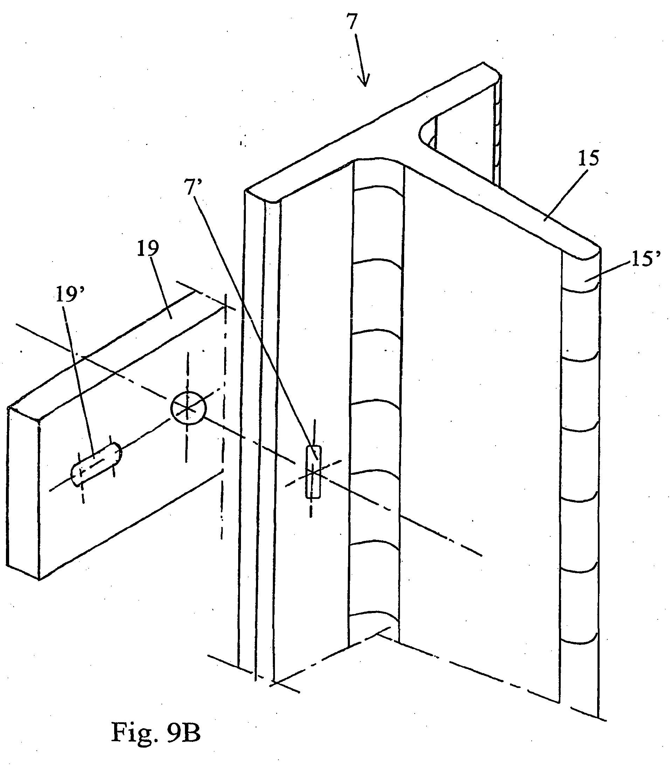

Conformément à deux variantes de réalisation préférées représentées aux figures 9A et 9B des dessins annexés, chaque rail 7 est fixé sur la face 3 de la façade ou du mur 2 à recouvrir par l'intermédiaire d'au moins deux plaquettes 19 comportant des orifices traversants oblongs 19' orientés selon la direction horizontale, le rail 7 étant solidarisé avec lesdites plaquettes 19 par soudage ou par vissage ou boulonnage, dans ce dernier cas les vis ou boulons peuvent être disposé(e)s dans des trous oblongs 7' orientés verticalement et ménagés dans ledit rail 7.

Ainsi, il est possible de régler l'écartement entre rails 7 (trous oblongs 19') et éventuellement la position verticale des rails 7 (trous oblongs 7').

En accord avec un premier mode de réalisation, les bacs plats 8 consistent en des bacs en matière plastique venus de moulage éventuellement de la matière plastique renforcée, au moins une nervure ou paroi de séparation analogue 9' étant formée ou rapportée sur leur paroi de fond 9, en subdivisant ainsi les volumes intérieurs desdits bacs 8 en deux compartiments dans la direction horizontale (définie pour lesdits bacs 8 après montage des modules 4 sur les rails verticaux 7).

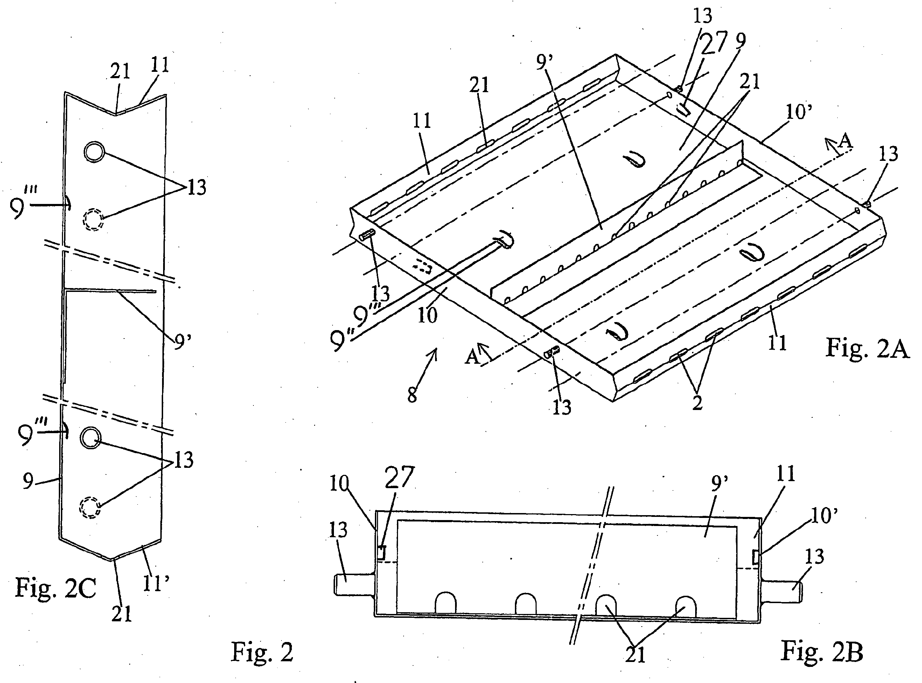

En accord avec un second mode de réalisation, les bacs 8 à configuration plate consistent en des bacs métalliques formés d'un seul tenant à partir de portions de tôle galvanisée découpées, pliées et assemblées par soudage au niveau des arêtes de jonction des parois latérales 10, 10', 11, 11', au moins une nervure ou paroi de séparation analogue 9' étant formée ou rapportée sur leur paroi de fond 9, en subdivisant ainsi les volumes intérieurs desdits bacs 8 en deux compartiments dans la direction horizontale (figures 2A et 2B).

Selon un troisième mode de réalisation, il peut être prévu que les bacs 8 soient réalisés en matière plastique renforcée ou non et que ces bacs soient entourés d'un cadre métallique portant les éléments d'accrochage 13 (non représenté).

Préférentiellement et comme le montrent les figures 1, 3, 4, 5 et 7 des dessins annexés, la paroi ajourée 12 présente une constitution grillagée, par exemple réalisée en métal déployé, et comporte au moins deux bords latéraux 12' pliés situés en regard et à proximité immédiate des faces internes des bords latéraux verticaux 10 et 10' du bac concerné 8.

Ladite paroi 12 est, par exemple, assemblée avec ledit bac 8 au moyen de plaquettes ou de rondelles 20 coopérant avec des vis de fixation solidaire de la paroi de fond 9 dudit bac 8. La paroi 12 pourra également présenter quatre bords 12' pliés, un au niveau de chacun de ses côtés.

Afin d'autoriser et de favoriser l'irrigation par écoulement vertical, les parois latérales opposées supérieure 11 et inférieure 11' des bacs 8, orientées horizontalement après montage des modules 4, présentent respectivement de profil ou en section transversale une forme concave et une forme convexe vues de l'extérieur, ces formes étant arrondies ou angulaires et ces parois 11 et 11' et, le cas échéant, la ou les nervures ou parois de séparation 9' comportant des perforations 21 pour le passage de liquide.

Les perforations 21 des parois 11 et 11' seront avantageusement situées au fond de la section concave ou convexe, par exemple en forme de chevron.

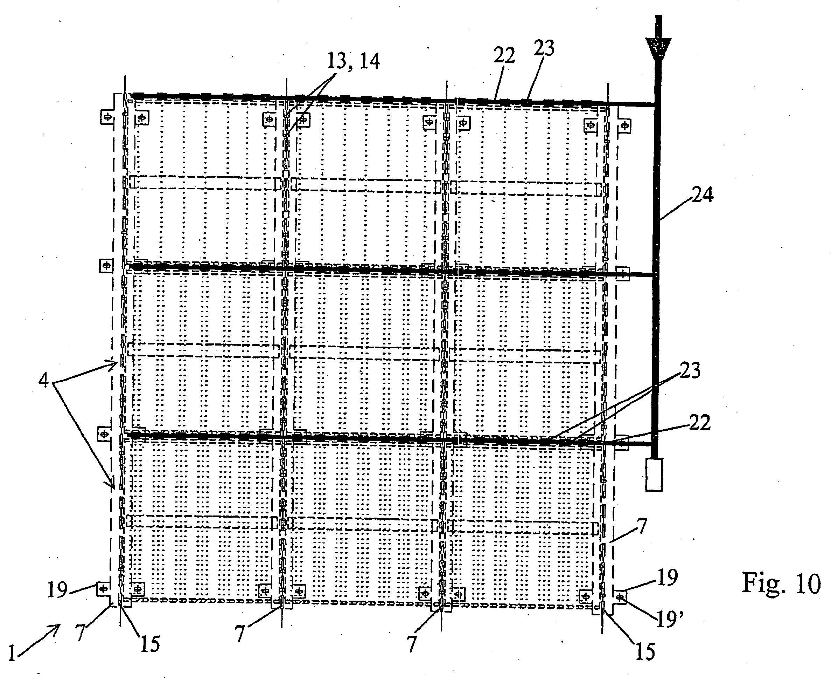

Conformément à l'invention, et comme cela ressort notamment des figures 10 à 13, le dispositif 1 comprend également un réseau d'irrigation comprenant une pluralité de portions de conduit 22 horizontales associées chacune à une rangée horizontale de modules 4 et comportant pour chaque module 4 un ou plusieurs orifices calibrés de déversement ou un ou plusieurs goutteurs 23, répartis longitudinalement le long de la portion considérée.

Ces portions de conduit horizontales 22 sont soit alimentées par un conduit principal 24 à extension verticale et relié à eux, soit intégrées dans un conduit unique d'un seul tenant.

Une gouttière ou un moyen de récupération allongé analogue 25 s'étend, le cas échéant, sous l'extrémité inférieure de la dernière rangée horizontale de modules 4.

Selon une première variante de réalisation non représentée, les portions de conduit horizontales 22 sont logées, préférentiellement de manière amovible, dans des renfoncements profilés horizontaux ménagés dans la paroi de fond des bacs, à proximité de l'extrémité supérieure des modules 4.

Selon une seconde variante de réalisation représentée aux figures précitées, les portions de conduit horizontales 22 s'étendent chacune au-dessus des parois latérales supérieures 11 d'une rangée horizontale de modules 4, en étant supportées dans des orifices traversants 7" ménagés dans les rails d'accrochage verticaux 7.

Comme le montrent les figures 12 et 13, la gouttière inférieure de récupération sera inclinée vers un côté latéral du dispositif 1 en vue de l'écoulement naturel du liquide d'irrigation ayant ruisselé le long des modules 4.

Comme le montrent également ces figures, la gouttière 25 peut avantageusement présenter une section transversale en U, avec un fond pourvu d'une ligne d'inflexion longitudinale formant point bas. Cette gouttière 25 est fixée sur les extrémités inférieures des rails 7 avant la mise en place des modules 4 et présente une forme discrète, en étant pratiquement jointive et affleurante avec la rangée inférieure de modules 4.

Afin de fournir des modules 4 légers et faciles à manipuler et de limiter les contraintes d'irrigation, le substrat 5 est essentiellement constitué de granulats en matériau expansé et/ou poreux et à forte rétention hydrique et la végétation 6 est de type tapissante et à faible consommation d'eau.

Plus précisément, le substrat peut être à base de granulats minéraux poreux légers à ultra-légers, voire volatiles, exploités en une courbe granulométrique régulière et fine (0 à 10 mm), d'une part de matière organique, d'amendements et d'éléments fertilisants de longue durée. Ces caractéristiques offrent une capacité de rétention en eau de longue durée (eau piégée dans un réseau capillaire fin) et une aération constante du milieu de culture. Elles réduisent les risques de pertes en volume et ne sont pas affectées par le temps (contrairement aux supports de culture à dominante organique).

En ce qui concerne les éléments de végétation 6, ceux-ci peuvent être sélectionnés de façon primaire dans la gamme des végétaux ayant fait leurs preuves en "végétalisation extensive de toitures" (plantes vivaces xérophiles couvre-sol), et de façon secondaire dans celle des plantes indigènes couvrant naturellement les murs (plantes dites "de fissures de roches", également vivaces). Une adaptation sévère est faite vis-à-vis de l'exposition (soleil, mi-ombre, ombre), caractéristique indispensable à la pérennité de la végétation dans les situations du dispositif.

La végétation fait l'objet d'une préculture de plusieurs mois. L'utilisation de rouleaux de végétation précultivés sur armature est également une option que peut utiliser le dispositif.

On comprend de ce qui précède que l'installation d'un dispositif de végétalisation 1 s'effectue normalement de la manière suivante sur une face plane 3 d'une façade ou d'un mur 2 :
- fixation avec réglage des plaquettes 19 sur la façade ou le mur 2, puis fixation avec réglage des rails 7 sur lesdites plaquettes 19 (en variante fixation avec réglage des rails 7 par l'intermédiaire des plaquettes 19 soudées sur eux) ;
- installation du réseau d'irrigation 22, 23, 24 et de la gouttière 25 ;
- accrochage des différents modules 4 en introduisant les doigts ou goujons 13 dans les segments 14' des découpes 14 des rails 7 et en les poussant jusqu'à ce qu'ils soient calés au fond des segments 14" consécutifs ;
- mise en place des différents profilés de verrouillage 16 en les positionnant avec les entrées des segments débouchants 17' des découpes 17 en faces des ergots ou doigts 13 des modules 4 déjà accrochés, puis en effectuant un mouvement de translation horizontal suivi d'un mouvement de translation vertical vers le bas jusqu'à ce que lesdits ergots ou doigts 13 soient calés au fond des segments 17" des découpes 17 desdits profilés 16 ;
- mise en place de la tige de blocage traversante 18'.

Les profilés de verrouillage 16 comporteront également des échancrures ou découpes 26 autorisant le passage des portions de conduit 22 et permettant le déplacement de ces profilés 16 sans interférer avec lesdites portions de conduit 22.

Comme cela ressort des dessins annexés et de ce qui précède, le dispositif 1 de végétalisation selon invention peut être, à titre d'exemple, principalement constitué d'éléments modulaires 4 de faible épaisseur et de poids unitaire faible, assemblés sur une structure porteuse 7, 19 masquée. Les modules 4 sont démontables et capables de fonctionner de façon autonome, ce qui peut permettre de réaliser des "taches vertes" isolément sur un mur 2, ou de commencer la végétalisation verticale à partir d'une hauteur inaccessible aux dégradations.

Ces modules présentent une végétation tapissante, homogène ou dans une certaine mesure "paysagée". Le dispositif 1 intègre avantageusement une alimentation directe en eau au niveau de chaque module 4. La maintenance se limite à un apport d'eau séquentiel et espacé dans le temps, qui est optimisé par l'utilisation d'un substrat spécifique et d'une végétation peu consommatrice d'eau. Une lame d'air de plusieurs centimètres ménagée entre les modules 4 et le mur 2 assure une aération et une efficacité thermique pour la construction. La modularité permet également d'installer un autre type de revêtement localement (bois, métal ou autre) en lieu et place d'un ou de plusieurs modules 4 végétalisés.

Préférentiellement, les modules 4 sont des bacs plats (épaisseur inférieure à 8 cm, préférentiellement comprise entre 4 à 8 cm), de dimensions qui les rendent facilement manipulables (60 x 60 cm ou davantage) et en particulier par un ou deux installateur(s). Leur structure interne permet de fractionner l'éventuel tassement du substrat 5 qui y sera déposé. Le fond 9 et les parois latérales 10, 10', 11, 11' du bac sont pleins. Le dessus du bac présente un maillage 12 (peut-être du métal déployé) de section appropriée pour retenir le substrat 5 mais laisser passer les plantes 6.

Le matériau constitutif des modules 4 peut être du plastique résistant et ces modules être fabriqués par thermoformage et comporter des reliefs formant cloisonnement.

En variante, le matériau constitutif des modules peut être du métal galvanisé. Les parois haute 11 et basse 11' présentent un profil respectivement "concave" et "convexe" et sont perforées, de façon à laisser l'eau circuler, et un cloisonnement efficace est réalisé par des lames métalliques horizontales ajourées 9'. La résistance du matériau permet d'y fixer latéralement des manchons ou goujons métalliques 13 permettant l'accrochage des bacs aux rails 7 de la structure porteuse.

Le substrat granulaire 5 est très léger et essentiellement minéral (matières expansées notamment). Sa courbe granulométrique et sa faible teneur en matière organique excluent un tassement sur le long terme qui pourrait être préjudiciable à la végétation ou à l'effet esthétique d'ensemble (ce contrairement à un substrat du type laine de roche).

Les plantes 6 sont choisies parmi les plus résistantes à la sécheresse, et aussi après observation de celles poussant spontanément sur les murs (en partie verticale), dont notamment les plantes succulentes. Leur choix tient compte de l'exposition des faces qui, à la verticale, est nécessairement tranchée.

La distribution du liquide d'irrigation est effectuée par une gaine ou portions de conduit 22 à goutteurs 23 intégrés de 8 mm de diamètre, répartis tous les 15 cm. Le réseau est asservi à une programmation automatique et peut comprendre éventuellement un recyclage du liquide d'irrigation, éventuellement associé à un traitement.

Pour chaque module 4, cette gaine peut être insérée dans un profil spécial du fond du bac 8, restant accessible de l'extérieur, mais irriguant l'intérieur. L'alimentation en eau se fait de haut en bas pour chaque rangée verticale. Les eaux excédentaires s'écoulent au sol.

En variante, cette gaine peut être insérée au-dessus de chaque niveau horizontal dans des trous 7" pratiqués dans la structure porteuse. L'eau entre dans les bacs grâce au profil concave des bords hauts, et est canalisée vers le bac inférieur par le profil convexe des bords bas. En partie basse de la construction, les bacs 8 sont pourvus d'une lame métallique située à 20 mm du bord bas, celui-ci formant alors gouttière canalisant les eaux excédentaires vers les exutoires locaux après raccordement des bacs les uns aux autres (variante par rapport à une gouttière unique inférieure recueillant les ruissellements de tous les bacs). En cas d'absence de besoin permanent d'irrigation sur un ou plusieurs bacs (présence d'ouvertures dans la paroi d'accrochage, choix localisé d'un autre revêtement), les goutteurs peuvent être neutralisés individuellement à la mise en oeuvre ou ultérieurement.

La structure porteuse est constituée de rails verticaux 7 spécifiques de la largeur des bacs, ces rails étant fixés sur la paroi 2 à recouvrir.

Les rails utilisent des profils métalliques en T, comportant des encoches permettant l'accrochage, le décrochage et le blocage des modules. Les modules sont avantageusement démontables individuellement.

Des caractéristiques additionnelles peuvent être prévues au niveau des modules 4, comme indiqué ci-après.

Ainsi, la paroi de fond 9 de chaque module 4, ou au moins de certains modules 4, peut être perforée et comporter des ouvertures 9" espacées.

Ces dernières permettent, d'une part, en position horizontale du module 4 (durant la phase de préculture), une évacuation du trop-plein de liquide nourricier ou d'eau d'arrosage et, d'autre part, une aération du substrat 5 en position verticale dudit module 4 (lorsque ce dernier est installé sur la structure porteuse).

Les ouvertures 9" peuvent avantageusement se présenter sous forme de crevées ou découpes ménagées dans la paroi 9 et définissant des languettes 9"' s'étendant à distance de la face interne de ladite paroi 9 (fig. 2C, 2A, 4B). Ainsi, le liquide d'irrigation pourra s'écouler normalement à travers les ouvertures 9" en position horizontale du module 4, alors qu'il aura tendance à s'écouler sur les languettes 9"' et par-dessus les ouvertures 9" lorsque le module est en position sensiblement verticale, limitant ainsi les pertes de liquide tout en autorisant une aération du substrat.

Les modules 4 peuvent aussi être pourvus, notamment en l'absence d'orifices traversants 7", de moyens 22' d'accrochage amovible des portions de conduits horizontales 22 au niveau des parois latérales horizontales supérieures 11 desdits modules 4, par exemple sous la forme de moyens de rétention par enclenchement élastique (figure 4B), montés au-dessus des ouvertures 21 desdites parois.

Les modules 4 sont munis de moyens 27 supplémentaires d'accrochage pour la manipulation des modules 4 (notamment de grande dimension ou pour leur soulèvement à des hauteurs importantes) au moyen d'une fourche d'un chariot (pourvue de doigts à leurs extrémités). Ces moyens 27 peuvent, par exemple, se présenter sous la forme de deux taquets opposés en regard, rapportés sur les faces internes des parois latérales verticales 10 et 10' et en étant inclinés vers ces dernières (figures 2A et 2B).

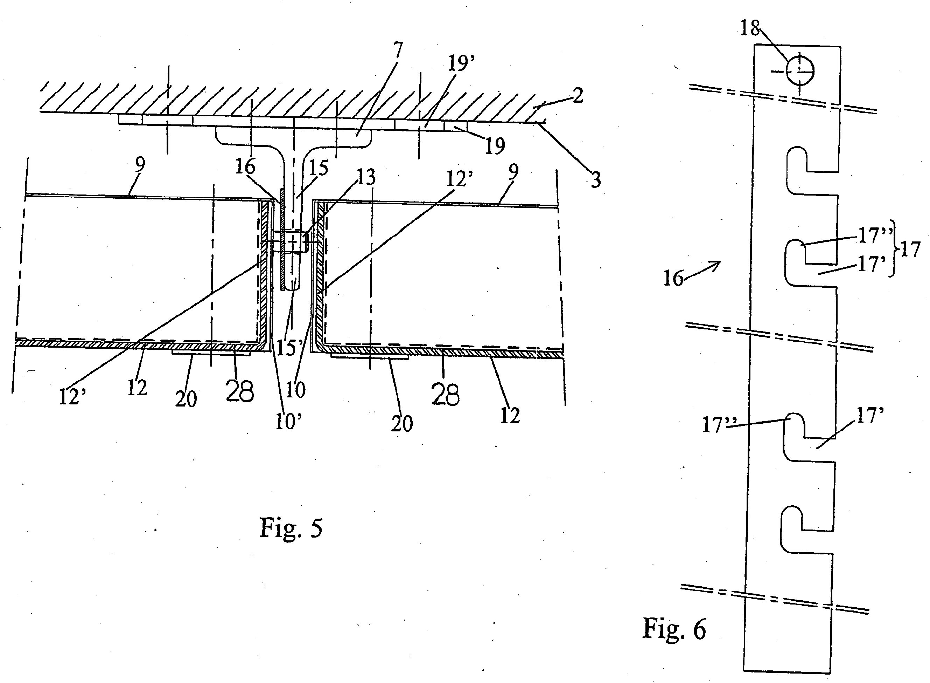

En vue de limiter la perte de substrat 5 au niveau des bords des modules 4, notamment lorsque la paroi ajourée 12 ne comporte pas de bords intérieurs pliés 12' ou que le substrat à une constitution trop fine par rapport au maillage de ladite paroi, il peut être prévu de doubler cette dernière par une deuxième paroi intérieure 28 à maillage plus fin ou plus serré, par exemple en un matériau synthétique souple imputrescible, et pourvue de bords latéraux repliés (en traits interrompus sur la figure 5). La paroi 12 assurera en tout état de cause la rigidité sur la face avant des modules 4.

L'homme du métier notera que la constitution du dispositif selon l'invention permet une mise en oeuvre et un démontage, aussi bien des bacs que de l'irrigation, vraiment aisés.

La possibilité de préculture avant montage sur site permet de limiter les interventions et le suivi après installation, surtout compte tenu de l'utilisation d'un substrat de culture hydrorétenteur et de plantes résistantes et vivaces.

De plus, l'arrosage contrôlé et la récupération du trop d'eau d'arrosage permettent de limiter le coût et l'impact sur l'environnement.

La possibilité de verrouillage permet d'utiliser le dispositif dans des lieux publics.

Le caractère autonome de l'installation peut lui conférer le statut d'élément du mobilier urbain et on peut envisager son emploi comme garde-corps, par exemple.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de végétalisation de façades ou de murs, principalement constitué, d'une part, par une structure porteuse fixée sur la face de la façade ou du mur à recouvrir, partiellement ou totalement, d'autre part, par au moins deux, préférentiellement une pluralité, de modules à structure plate et à contour carré ou rectangulaire, contenant un substrat de culture et présentant sur l'une de ses grandes faces des éléments de végétation apparents,
ces modules (4) étant montés de manière amovible sur la structure porteuse (7, 19) en masquant sensiblement cette dernière, cette structure porteuse consistant essentiellement en au moins deux rails verticaux (7) espacés sur lesquels les modules (4) sont montés en rangées verticales en étant situés à distance de la façade ou du mur (2) et en étant démontables individuellement,
chaque module (4) se présentant sous la forme d'un bac (8) de constitution générale plate, de forme parallélépipédique, de faible épaisseur par rapport à ses dimensions latérales et avec une paroi de fond (9) et des parois latérales (10, 10', 11, 11') sensiblement pleines et,
la face ouverte du bac (8), qui est opposée au fond (9), étant fermée par une paroi ajourée (12) autorisant le passage des éléments de végétation (6) et
appropriée pour retenir le substrat (5),
dispositif (1) **caractérisé :**
**en ce que** les parois latérales opposées (10 et 10'), orientées verticalement après montage, de chaque bac (8) sont pourvues d'éléments d'accrochage (13) destinés à coopérer avec des sites de réception (14) adaptés présents sur les rails de montage (7),
**en ce qu'**il comporte également un réseau d'irrigation comprenant une pluralité de portions de conduit (22) horizontales associées chacune à une rangée horizontale de modules (4) et comportant pour chaque module (4) un ou plusieurs orifices calibrés de déversement ou un ou plusieurs goutteurs (23), et
**en ce que** des moyens (22') d'accrochage amovible des portions de conduit horizontales (22) sont présents au niveau des parois latérales horizontales supérieures (11) desdits modules (4).

2. Dispositif selon la revendication 1, **caractérisé en ce que** les moyens d'accrochage amovible (22') se présentent sous la forme de moyens de rétention par enclenchement élastique.

3. Dispositif selon la revendication 1 ou 2, **caractérisé en ce que** les orifices calibrés de déversement ou goutteurs (23) sont répartis longitudinalement le long de la portion considérée, les portions de conduit horizontales (22) étant soit alimentées par un conduit principal (24) à extension verticale et relié à eux, soit intégrées dans un conduit unique d'un seul tenant.

4. Dispositif selon la revendication 1 ou 2, **caractérisé en ce que** les portions de conduit horizontales (22) sont supportées dans des orifices traversants (7") ménagés dans les rails d'accrochage verticaux (7).

5. Dispositif selon l'une quelconque des revendications 1 à 4, **caractérisé en ce qu'**il comprend, en outre, une gouttière ou un moyen de récupération allongé analogue (25) qui s'étend, le cas échéant, sous l'extrémité inférieure de la dernière rangée horizontale de modules (4).

6. Dispositif selon l'une quelconque des revendications 1 à 5, **caractérisé en ce que** le substrat (5) est essentiellement constitué de granulats en matériau expansé et/ou poreux et à forte rétention hydrique et **en ce que** la végétation (6) est de type tapissante et à faible consommation d'eau.

7. Dispositif selon l'une quelconque des revendications 1 à 6, **caractérisé en ce que** les bacs plats (8) consistent en des bacs en matière plastique venus de moulage éventuellement de la matière plastique renforcé, au moins une nervure ou paroi de séparation analogue (9') étant formée ou rapportée sur leur paroi de fond (9), en subdivisant ainsi les volumes intérieurs desdits bacs (8) en deux compartiments dans la direction horizontale.

8. Dispositif selon l'une quelconque des revendications 1 à 6, **caractérisé en ce que** les bacs (8) à configuration plate consistent en des bacs métalliques formés d'un seul tenant à partir de portions de tôle galvanisée découpées, pliées et assemblées par soudage au niveau des arêtes de jonction des parois latérales (10, 10', 11, 11'), au moins une nervure ou paroi de séparation analogue (9') étant formée ou rapportée sur leur paroi de fond (9), en subdivisant ainsi les volumes intérieurs desdits bacs (8) en deux compartiments dans la direction horizontale.

9. Dispositif selon l'une quelconque des revendications 1 à 8, **caractérisé en ce que** les parois latérales opposées supérieure (11) et inférieure (11') des bacs (8), orientées horizontalement après montage des modules (4), présentent respectivement de profil ou en section transversale une forme concave et une forme convexe vues de l'extérieur, ces formes étant arrondies ou angulaires et ces parois (11 et 11') et, le cas échéant, la ou les nervures ou parois de séparation (9') comportant des perforations (21) pour le passage de liquide.

10. Dispositif selon l'une quelconque des revendications 1 à 9, **caractérisé en ce que** la paroi ajourée (12) présente une constitution grillagée, par exemple réalisée en métal déployé, et comporte au moins deux bords latéraux (12') pliés situés en regard et à proximité immédiate des faces internes des bords latéraux verticaux (10 et 10') du bac concerné (8) et **en ce que** ladite paroi (12) est assemblée avec ledit bac (8) au moyen de plaquettes ou de rondelles (20) coopérant avec des vis de fixation solidaire de la paroi de fond (9) dudit bac (8).

11. Dispositif selon l'une quelconque des revendications 1 à 10, **caractérisé en ce que** chaque rail (7) est fixé sur la face (3) de la façade ou du mur (2) à recouvrir par l'intermédiaire d'au moins deux plaquettes (19) comportant des orifices traversants oblongs (19') orientés selon la direction horizontale, le rail (7) étant solidarisé avec lesdites plaquettes (19) par soudage ou par vissage ou boulonnage, dans ce dernier cas les vis ou boulons peuvent être disposé(e)s dans des trous oblongs (7') orientés verticalement et ménagés dans ledit rail (7).

## Patentansprüche

1. Vorrichtung zur Begrünung von Fassaden oder Mauern im Wesentlichen bestehend aus einerseits einer Tragstruktur, die auf der teilweise oder vollständig zu überdeckenden Oberfläche der Fassade oder der Mauer befestigt ist, und andererseits aus mindestens zwei, vorzugsweise einer Vielzahl, von Modulen ebener Struktur und quadratischer oder rechteckiger Kontur, die ein Pflanzensubstrat beinhalten und auf einer ihrer großen Seiten sichtbare Vegetationselemente aufweisen,
wobei diese Module (4) in abnehmbarer Weise auf der Tragstruktur (7, 19), diese letztere merklich verdeckend, montiert sind, wobei diese Tragstruktur im Wesentlichen mindestens zwei beabstandete Vertikalschienen (7) umfasst, auf welchen die Module (4) in vertikalen Reihen montiert sind, wobei sie von der Fassade oder der Mauer (2) beabstandet sind und wobei sie individuell demontierbar sind,
wobei sich jedes Modul (4) in Form eines Behälters (8) von im Wesentlichen ebener Beschaffenheit, von parallelepipedischer Form, von geringer Dicke im Vergleich zu seinen lateralen Abmessungen und mit einer Bodenwand (9) und im Wesentlichen durchgängigen lateralen Wänden (10, 10', 11, 11') zeigt und,
wobei die offene Seite des Behälters (8), die dem Boden (9) gegenüber liegt, über eine durchbrochene Wand (12) geschlossen ist, welche den Durchgang der Vegetationselemente (6) erlaubt und geeignet ist, um das Substrat (5) zurückzuhalten,
wobei die Vorrichtung (1) **gekennzeichnet ist,**
**dadurch**, dass die gegenüberliegenden Seitenwände (10, 10') jedes Behälters (8), die nach der Montage vertikal angeordnet sind, mit Einhängeelementen (13) versehen sind, die eingerichtet sind, um mit angepassten Aufnahmestellen (14) zusammenzuarbeiten, die auf den Montageschienen (7) vorhanden sind,
**dadurch**, dass sie auch ein Bewässerungsnetz aufweist, das eine Vielzahl von horizontalen Kanalabschnitten (22) aufweist, die jeweils einer horizontalen Reihe von Modulen (4) zugeordnet sind und das für jedes Modul (4) ein oder mehrere kalibrierte Einleitöffnungen oder ein oder mehrere Tropfer (23) aufweist, und
**dadurch**, dass die abnehmbaren Einhängemittel (22') der horizontalen Kanalabschnitte (22) im Bereich der oberen horizontalen Wände (11) des besagten Moduls (4) vorgesehen sind.

2. Vorrichtung nach Anspruch 1, **dadurch gekennzeichnet, dass** die abnehmbaren Einhängemittel (22') sich in Form von elastisch einrastenden Haltemitteln zeigen.

3. Vorrichtung nach Anspruch 1 oder 2, **dadurch gekennzeichnet, dass** die kalibrierten Einleitöffnungen oder die Tropfer (23) longitudinal entlang der Länge des betrachteten Abschnitts verteilt sind, wobei die horizontalen Kanalabschnitte (22) entweder von einem Hauptkanal (24) versorgt werden, der eine vertikale Erstreckung hat und mit ihnen verbunden ist, oder in einen einzigen Kanal an einem Stück integriert sind.

4. Vorrichtung nach Anspruch 1 oder 2, **dadurch gekennzeichnet, dass** die horizontalen Kanalabschnitte (22) von Durchgangsöffnungen (7") getragen werden, die in den vertikalen Einhängeschienen (7) geführt sind.

5. Vorrichtung nach einem der Ansprüche 1 bis 4, **dadurch gekennzeichnet, dass** sie unter anderem eine Regenrinne oder ein analoges, längliches Rückgewinnungsmittel (25) aufweist, welches sich gegebenenfalls unter dem unteren Ende der letzten horizontalen Reihe von Modulen (4) erstreckt.

6. Vorrichtung nach einem der Ansprüche 1 bis 5, **dadurch gekennzeichnet, dass** das Substrat (5) im Wesentlichen Granulate von expandiertem und/oder porösem Material und mit starkem Wasserrückhalt umfasst und dadurch, dass die Vegetation (6) deckender Art ist und einen geringen Wasserverbrauch hat.

7. Vorrichtung nach einem der Ansprüche 1 bis 6, **dadurch gekennzeichnet, dass** die ebenen Behälter (8) aus dem Formguss kommende Behälter aus Plastikmaterial, gegebenenfalls aus verstärktem Plastikmaterial, umfassen, wobei mindestens eine Rippe oder analoge Trennwand (9') auf deren Bodenwand (9) geformt oder getragen ist, um dadurch die Innenvolumen der Behälter (8) in zwei Kammern in horizontaler Richtung zu unterteilen.

8. Vorrichtung nach einem der Ansprüche 1 bis 6, **dadurch gekennzeichnet, dass** die Behälter (8) mit ebener Konfiguration metallische Behälter umfassen, die aus einem Stück ausgehend von galvanisierten Blechabschnitten geformt sind, die geschnitten, gebogen und im Bereich der Verbindungskanten der Seitenflächen (10, 10', 11, 11') durch Verschweißen zusammengefügt sind, wobei mindestens eine Rippe oder analoge Trennwand (9') auf deren Bodenwand (9) geformt oder getragen ist, um dadurch die Innenvolumen der Behälter (8) in zwei Kammern in horizontaler Richtung zu unterteilen.

9. Vorrichtung nach einem der Ansprüche 1 bis 8, **dadurch gekennzeichnet, dass** die gegenüberliegenden oberen und unteren Seitenwände (11 und 11') der Behälter (8), die nach der Montage der Module (4) horizontal orientiert sind, jeweils im Profil oder in transversalem Schnitt von außen gesehen eine konkave Form bzw. eine konvexe Form zeigen, wobei die Formen abgerundet oder eckig sind und diese Wände (11 und 11') und gegebenenfalls die eine oder die mehreren Rippen oder Trennwände (9') Perforationen (21) für den Durchgang von Flüssigkeit aufweisen.

10. Vorrichtung nach einem der Ansprüche 1 bis 9, **dadurch gekennzeichnet, dass** die durchbrochene Wand (12) eine vergitterte, beispielsweise als Streckmetall realisierte Struktur zeigt und mindestens zwei gebogene Seitenwände (12') aufweist, die bezüglich und in unmittelbarer Nähe der Innenseiten des vertikalen Seitenrandes (10 und 10') des betreffenden Behälters (8) angeordnet sind, und dadurch, dass die besagte Wand (12) mit dem besagten Behälter (8) mittels Plättchen oder Unterlagscheiben (20) zusammengefügt ist, die mit Befestigungsschrauben zusammenarbeiten, welche mit der Bodenwand (9) des besagten Behälters (8) fest verbunden sind.

11. Vorrichtung nach einem der Ansprüche 1 bis 10, **dadurch gekennzeichnet, dass** jede Schiene (7) auf der zu überbedeckenden Seite (3) der Fassade oder der Mauer (2) unter Zwischenschaltung mindestens zweier Scheibchen (19) befestigt ist, die längliche Durchgangsöffnungen (19') aufweisen, welche entlang der horizontalen Richtung orientiert sind, wobei die Schienen (7) mit den besagten Scheibchen (19) durch Verschweißen oder durch Schraub- oder Bolzenverbindung fest verbunden sind, wobei im letzteren Fall die Schrauben oder Bolzen in den länglichen Löchern (7'), die vertikal orientiert und in den Schienen (7) geführt sind, angeordnet werden können.

## Claims

1. Device for covering facades or walls with vegetation, mainly comprising, on the one hand, a support structure attached to the front of the facade or wall to be partially or totally covered, and, on the other hand, at least two and preferably a plurality of modules with a flat structure, either square or rectangular, containing a cultivation substrate and having on one of its major surfaces visible vegetation elements,
said modules (4) being mounted in a stationary manner on the support structure (7, 19) while essentially concealing the latter, said support structure essentially consisting of at least two vertical rails (7), spaced apart from one another, on which the modules (4) are mounted in vertical rows, being located at a distance from the facade or wall (2) and being individually removable,
each module (4) taking the form of a generally flat box (8), in the shape of a parallelepiped, with a small thickness relative to its lateral dimensions and with a relatively solid bottom wall (9) and lateral walls (10, 10', 11, 11'), and
the open surface of the box (8) that is opposite to the bottom wall (9) being closed by an openwork wall (12) allowing the passage of vegetation elements (6) and suitable for holding the substrate (5),
device (1) **characterised:**
**in that** the opposing lateral walls (10 and 10'), oriented vertically after installation, of each box (8), are provided with hanging elements (13) designed to interact with suitable receiving sites (14) that are present on the mounting rails (7),
**in that** it further comprises a watering network comprising a plurality of horizontal pipe portions (22), each connected to one horizontal row of modules (4) and including for each module (4) one or more calibrated discharge openings or one or more emitters (23), and
**in that** hanging means (22') removable from the horizontal pipe portions (22) are present on the upper horizontal lateral (11) of said modules (4).

2. Device according to claim 1, **characterised in that** the removable hanging means (22') take the form of elastically interlocking retaining means.

3. Device according to claim 1 or 2, **characterised in that** the calibrated discharge openings or emitters (23) are distributed longitudinally along the portion concerned, the horizontal pipe portions (22) being either supplied by a main pipe (24) with a vertical extension and interconnected, or integrated in a single pipe all in one block.

4. Device according to claim 1 or 2, **characterised in that** the horizontal pipe portions (22) are supported in crosswise openings (7") arranged in the vertical mounting rails (7).

5. Device according to any one of claims 1 to 4, **characterised in that** it further comprises a gutter or a similar elongated recovery means (25) that extends, where applicable, under the bottom end of the last horizontal row of modules (4).

6. Device according to any one of claims 1 to 5, **characterised in that** the substrate (5) essentially comprises granulates of expanded and/or porous material with high water retention, **in that** the vegetation (6) is of the covering type with low water consumption.

7. Device according to any one of claims 1 to 6, **characterised in that** the flat boxes (8) consist of plastic boxes moulded from reinforced plastic, at least one rib or similar separating wall (9') being formed with or attached to their bottom wall (9), thus subdividing the internal volumes of said boxes (8) into two compartments in the horizontal direction.

8. Device according to any one of claims 1 to 6, **characterised in that** the boxes (8) with a flat configuration consist of metallic boxes formed all in one block based on portions of cut-out galvanised sheet metal, folded and assembled by welding at the level of the joining edges of the lateral walls (10, 10', 11, 11'), at least one rib or similar separating wall (9') being formed with or attached to their bottom wall (9), thus subdividing the internal volumes of said boxes (8) into two compartments in the horizontal direction.

9. Device according to any one of claims 1 to 8, **characterised in that** the upper (11) and lower (11') opposite lateral walls of the box (8), oriented horizontally after installation of the modules (4), have a concave shape and a convex shape, viewed from outside, in profile or cross-section respectively, said shapes being rounded or angular and said walls (11 and 11') and the separating rib or wall (9') comprising perforations (21) for the passage of liquid.

10. Device according to any one of claims 1 to 9, **characterised in that** the openwork wall (12) is latticed, for example being made of expanded metal, and comprises at least two folded lateral edges (12') opposite and in immediate proximity to the inside surfaces of the vertical lateral edges (10 and 10') of the pertinent box (8) and **in that** said wall (12) is assembled with said box (8) by means of small plates or washers (20) interacting with fastening screws that are integral with the bottom wall (9) of said box (8).

11. Device according to any one of claims 1 to 10, **characterised in that** each rail (7) is fixed on the surface (3) of the facade or wall (2) to be covered by means of at least two small plates (19) comprising oblong crosswise openings (19') oriented in the horizontal direction, the rail (7) being made integral with said small plates (19) by welding or by screwing or by bolting; in the latter case the screws or bolts can be accommodated in oblong holes (7') oriented vertically and arranged in said rail (7).
